# EUROPEAN PATENT APPLICATION

(11) **EP 2 672 146 A1**
(43) Date of publication of application: **11.12.2013**
(21) Application number: 12183383.4
(22) Date of filing: 06.09.2012
(51) Int. Cl.: F16H 49/00

(54) **Harmonic drive with stationary flexspine**

(30) Priority: 06.06.2012 TW 101210934
(71) Applicant: Yeh, Chun-Shen, Taipei City 110 (TW)
(72) Inventor: Yeh, Chun-Shen, Taipei City 110 (TW)
(74) Representative: Gee, Steven William

(57) **Abstract**

A harmonic reducer with stationary flexspline is disclosed comprising a circular spline, a flexspline and a wave generator. The flexspline is assembled with the circular spline and the wave generator is assembled with the flexspline and a power source, so the flexspline deforms and partially engages with the circular spline. The flexspline is fixed while the circular spline is connected to an output shaft. Thus, when the power source drives the wave generator to rotate, the flexspline also drives the circular spline and the output shaft to rotate simultaneously.

## Description

### BACKGROUND OF THE INVENTION

### 1. Field of the Invention

The present invention relates to a harmonic reducer which can reduce the sway of the output shaft, lower the wear of the flexspline, and moreover, reduce the cost of production.

### 2. The Prior Arts

The harmonic reducer is a gear drive which uses flexible components to generate flexible mechanical wave to transmit power and motion. It is also called a "harmonic gear drive" (also known as the harmonic drive).

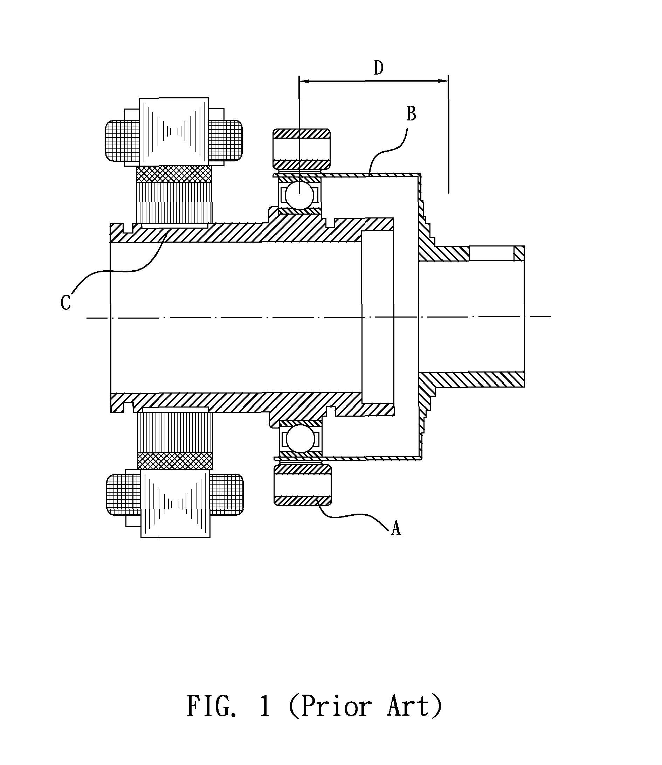

Fig. 1 shows the structure of a conventional harmonic reducer which comprises of three components: a circular spline A which disposes an internal gear, a flexspline B which disposes an external gear and a wave generator C. When the harmonic drive functions as a reducer, the conventional type of operation is to set the circular spline A as stationary, the wave generator C as active operating and the flexspline B as the power output.

Flexspline B is a thin-walled gear which has a greater range of elastic deformation, where the inner diameter is equal or slightly larger than the total outer diameter of the wave generator. The wave generator C is a component which can elastically deform the flexspline B within a controllable range. The wave generator C disposes a central axis, wherein the central axis is installed with a deformable rolling bearing to form a roller. The wave generator C is then assembled inside the flexspline B so the outer wall of the wave generator C and the inner wall of the flexspline B are compressed against each other tightly. The wave generator C is connected to a power source which is typically a motor. When the wave generator C is installed into the flexspline B, the flexspline is forced from the round shape into an oval shape. The external gear on the two ends of the long axis of the oval are further pushed to be completely engaged with the internal gear of the circular spline A, whereas the external gear near the two ends of the short axis are completely disengaged with the internal gear of the circular spline. The rest of the external gear on other parts of the perimeter is in a transition state between engaged and disengaged. When the wave generator rotates continuously, the deformation of the flexspline also changes continuously, whereas the engaging state between the flexspline B and circular spline A also changes simultaneously. The cycle of the engagement starts from engaging in, engaged, engaging out, disengaged and then repeats onwards so the flexspline slowly rotates in the opposite direction of the wave generator C in relative to the circular spline.

During the driving process, the number of times a point on flexspline B deforms during one revolution of the wave generator is defined as the wave number n. The most widely used drive type is the double wave drive due to its smaller flexspline stress, simpler structure and a greater drive ratio. The pitches of the gears in the flexspline and circular spline of the harmonic gear drive are the same, but the numbers of the gear teeth are not.

When the circular spline is fixed, the wave generator is rotated and the flexspline is driven to rotate. The drive ratio of the harmonic gear drive is equal to: i=-B1/(A1-B1), where A1 and B1 are the number of gear teeth of the circular spline A and the flexspline B, respectively.

Because of the large number of the flexspline gear teeth, the harmonic gear drive can acquire a large drive ratio.

Because of the surface contact between the gear teeth and the high number of simultaneously engaged gear teeth, the harmonic reducer has the advantages of a smaller load per unit area and a higher bearing capacity compared to other drive types during the harmonic drive process. The harmonic reducer also has the benefit of a large drive ratio, where the drive ratio of a single stage harmonic gear drive can be i=70∼500. Furthermore, The harmonic reducer has the advantages of a small size, light weight, high drive efficiency, long life, high stability, impact free, low noise and high motion accuracy; therefore, the harmonic reducer has a wide range of applications.

However, during the drive process of the reducer, the flexspline needs to endure a larger alternating load which causes the flexspline to be damaged easily. In this case, the required fatigue strength, and the required technique level of process and heat treatment of the flexspline material are higher. The processing technique is also more complex.

In addition, in the conventional harmonic reducer, the distance D between the output shaft and the engaging location of circular spline and flexspline is greater, which can cause the sway due to different axis and the increase of heat and noise due to friction.

### SUMMARY OF THE INVENTION

A primary object of the present invention is to overcome the drawbacks of the conventional reducer with a fixed circular spline, a driven-to-rotate flexspline and wave generator. The conventional harmonic reducer has the drawbacks of easily damaged flexspline, high fatigue strength requirements for the flexspline material, high technique level for processing and heat treatment, complex process technique and high production cost.

In order to overcome these drawbacks, the present invention provides a harmonic reducer with stationary flexspline which comprises a circular spline, a flexspline and a wave generator. The flexspline is assembled with the circular spline while the wave generator is assembled with the flexspline and a power source; therefore the flexspline deforms and engages partially with the circular spline. The flexspline is fixed while the circular spline is connected to an output shaft. Thus, when the power source drives the wave generator to rotate, the flexspline also drives the circular spline and the output shaft to rotate simultaneously.

The circular spline of the present invention disposes an internal space within, and an inner circumferential wall of the internal space forms an internal gear which is composed of a plurality of internal gear tooth. The circular spline is connected to an output shaft; the flexspline of the present invention is a thin-walled cylinder and an outer circumferential surface of the flexspline forms an external gear which is composed of a plurality of external gear tooth. One end of the thin-walled cylinder disposes a flange and the flange disposes a plurality of holes for coordinating with stationary components, so the flexspline is fixed; the wave generator of the present invention is assembled onto the inner circumference to deform the flexspline and to engage the external gear with the internal gear partially. The wave generator is connected to a power source which drives the wave generator to rotate, and then the wave generator further drives the circular spline and output shaft to rotate.

The flange disposed on the flexspline of the present invention can be disposed circularly on one end of the flexspline.

By setting the flange disposed on the flexspline of the harmonic reducer in the present invention into a hat-shaped form, the flexspline can be stationary and deformable at the same time. The flexspline can be assembled with the circular spline and the output shaft to produce power output with reducing speed; hence, simplify the processing, reduce the damage, and lower the production cost and material wear of the flexispline. Through the change of the described structure, the engaging location of the circular spline and the flexspline can be closer to the output shaft so that the sway caused by different axis is reduced and therefore reduce the heat and noises caused by friction. The rotating direction of the circular spline can also be the same as the rotating direction of the motor output for simpler installation steps.

### BRIEF DESCRIPTION OF THE DRAWINGS

The present invention will be apparent to those skilled in the art by reading the following detailed description of a preferred embodiment thereof, with reference to the attached drawings, in which:

Fig. 1 is a plane section view showing the structure of a conventional harmonic reducer.

Fig. 2 is an exploded perspective view showing the assembling relations between each elements of the harmonic reducer of the present invention.

Fig. 3 is a plane section view showing the structure of the harmonic reducer of the present invention.

Fig. 4 is a plane schematic view showing one end of the harmonic reducer of the present invention.

### DETAILED DESCRIPTION OF THE PREFERRED EMBODIMENT

An embodiment of the present invention will be described in details with reference to the drawings so that this disclosure is thorough and fully conveys the concept of the invention to those who skilled in the art.

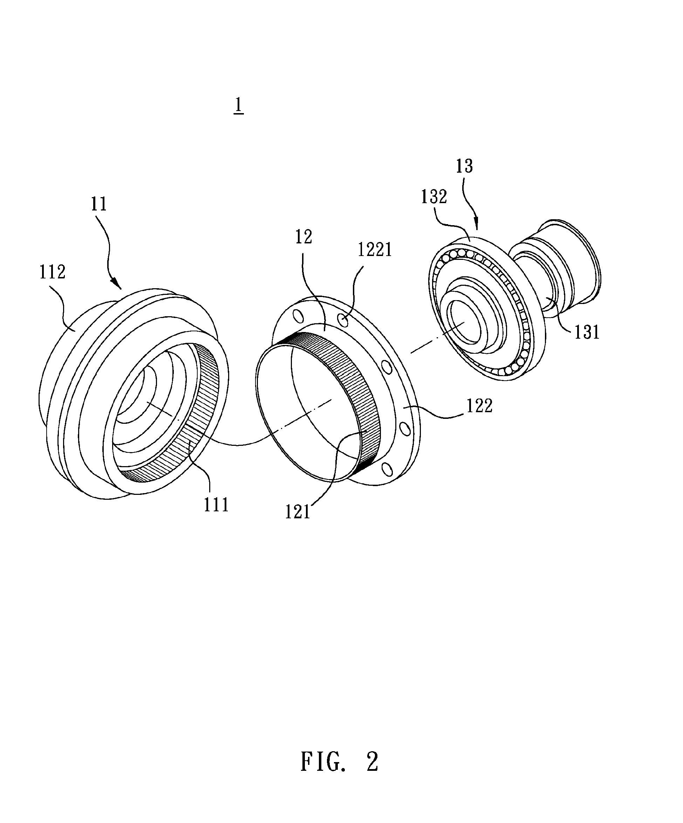

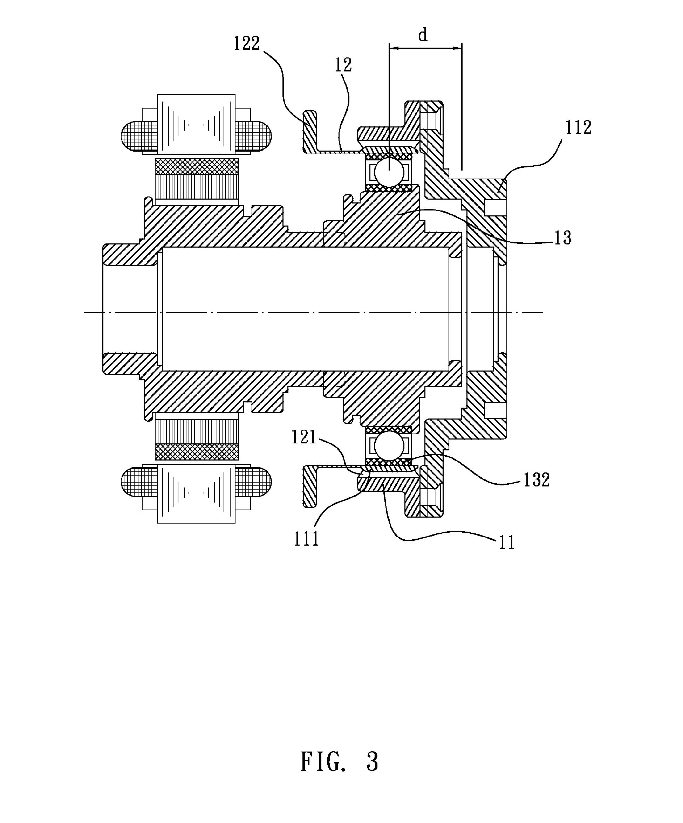

As shown in Fig. 2 and Fig. 3, the harmonic reducer with stationary flexspline 1 provided in the present invention comprises a circular spline 11, a flexspline 12 and a wave generator 13. The circular spline 11 disposes an internal space thereof and an inner circumferential wall of the internal space forms an internal gear 111 which is composed of a plurality of internal gear tooth. The circular spline 11 is connected to an output shaft 112. In the preferred embodiment of the present invention, the output shaft 112 is integrated at an end of the circular spline 11 as one piece, wherein the output shaft 112 can dispose a plurality of holes or screw holes for assembling additional output device for power output.

The flexspline 12 is a thin-walled cylinder and an outer circumferential surface of the flexspline forms an external gear 121 which is composed of a plurality of external gear tooth. One end of the thin-walled cylinder disposes a flange 122 which disposes a plurality of holes 1221 for coordinating stationary components, so the flexspline can be fixed to the casing of the reducer (not shown in graph). In the preferred embodiment of the present invention, the flange 122 can be integrated onto one end of the flexspline 12 as one piece to form a circular shape, or it can also be a pre-made flange that is welded to one end of the flexspline.

The wave generator 13 of the present invention is a deformable bearing which disposes a central axis 131 and an outer ring 132, wherein the central axis 131 is an oval that is close to a circle in shape so the mutual rotation is allowed between the outer ring 132 and the central axis 131. The central axis is connected to a power source (not shown in graph) which is normally a motor.

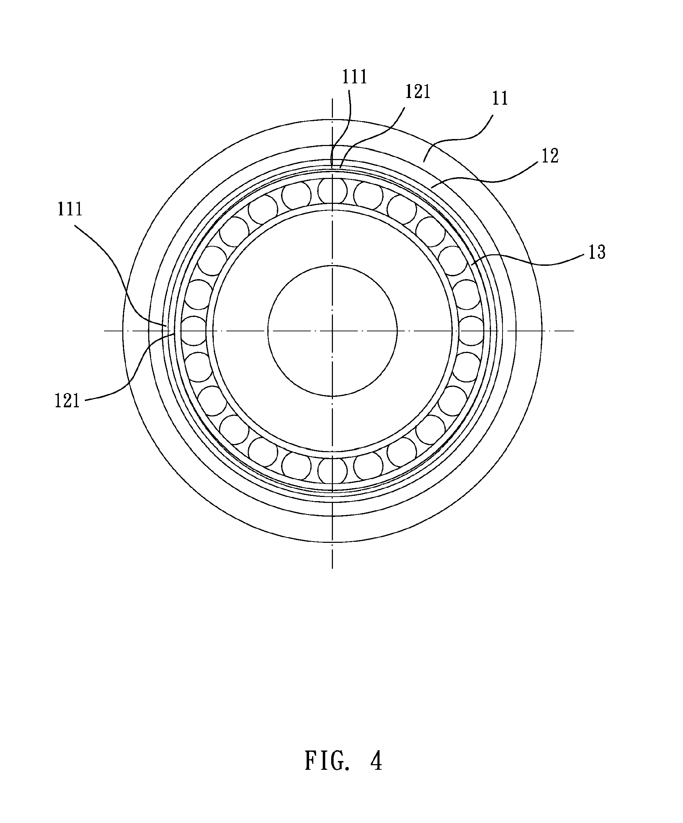

The assembling method of each components of the harmonic reducer in the present invention will be described next. First, the flexspline 12 is assembled in the internal space of the circular spline 11, and the wave generator 13 is installed onto the inner perimeter of the flexspline 12. The flexspline 12 is a thin-walled gear which can be greater elastically deformed, and the inner diameter of the flexspline 12 is equal or slightly greater than the total outer diameter of the wave generator 13, while the wave generator 13 is a component which can deforms the flexspline elastically in a controllable range. When the wave generator 13 is installed into the flexspline 12, the ends of the flexspline 12 is forced from the circular shape into an oval shape (as shown in Fig. 4). The external gear 121 near the two ends of the long axis of the oval is further pushed and engaged with the internal gear 111 of the circular spline 11 completely, whereas the external gear near the two ends of the short axis of the oval is completely disengaged with the internal gear of the circular spline. The rest of the external gear on the other parts of the perimeter is in a transition state between engaged and disengaged. When the wave generator 13 rotates continuously, the deformation of the flexspline 12 changes continuously, so the engaging status of flexspline 12 and circular spline 11 also changes constantly. The cycle of the engagement starts from engaging in, engaged, engaging out, disengaged and then repeats onwards so the circular spline 11 slowly rotates in the same direction of the wave generator 13 in relative to the flexspline 12.

As shown in Fig. 3, the distance d between the output shaft and the engaging location of the circular spline 11 and the flexspline 12 in the present invention is brought closer through the change of the described structure. Hence, the sway due to different axis can be reduced and the heat and noise generated by friction is also decreased. The rotating direction of the circular spline can also be the same as the rotating direction of the motor output for easier installation steps.

The preferred embodiment described above is disclosed for illustrative purpose but to limit the modifications and variations of the present invention. Thus, any modifications and variations made without departing from the spirit and scope of the invention should still be covered by the scope of this invention as disclosed in the accompanying claims.

## Claims

1. A harmonic reducer with stationary flexspline, comprising:
a circular spline, wherein an internal space is disposed in the circular spline and an inner circumferential wall of the internal space forms an internal gear which is composed of a plurality of internal gear tooth; the circular spline is connected to an output shaft;
a flexspline, wherein the flexspline is a thin-walled cylinder and an outer circumferential surface of the flexspline forms an external gear which is composed of a plurality of external gear tooth; one end of the thin-walled cylinder disposes a flange and the flange disposes a plurality of holes for coordinating stationary components, so the flexspline is fixed; and
a wave generator, wherein the wave generator is assembled onto the inner circumference to deform the flexspline and to partially engage the external gear with the internal gear; the wave generator is connected with a power source to be driven to rotate, and the wave generator further drives the circular spline and output shaft to rotate.

2. The harmonic reducer with stationary flexspline as claimed in Claim 1, wherein the flange is disposed on the flexspline circularly.
